# DEMANDE DE BREVET EUROPEEN

(11) **EP 1 293 821 A1**
(43) Date de publication de la demande: **19.03.2003**
(21) Numéro de dépôt: 02354139.4
(22) Date de dépôt: 11.09.2002
(51) Int. Cl.: G02C 11/02, G02C 7/02

(54) **Procédé de décoration d'un oculaire pour lunettes, et oculaire réalisé selon le procédé**

(30) Priorité: 12.09.2001 FR 0111770
(71) Demandeur: OCSOL, 01460 Montreal la Cluse (FR)
(72) Inventeur: Noyer, Emile, 01460 Montreal la Cluse (FR)
(74) Mandataire: Gasquet, Denis

(57) **Abrégé**

Procédé de décoration d'un oculaire pour lunettes, caractérisé en ce qu'il consiste à :
- former l'oculaire selon une configuration choisie,
- appliquer un matériau de protection sur la globalité de l'oculaire,
- enlever, dans les zones choisies, le matériau de protection par une opération d'usinage,
   appliquer le matériau coloré dans lesdites zones.

## Description

La présente invention concerne un procédé de décoration d'un oculaire notamment pour lunettes ainsi que l'oculaire décoré selon le procédé.

Elle concerne plus particulièrement mais non exclusivement, le domaine des lunettes sans monture, comme celles dites « trois pièces », c'est-à-dire comprenant exclusivement deux branches et un nez reliant à elles seules les oculaires, ou comme celle constituées d'un écran oculaire unique, comprenant deux branches

Ces lunettes ont l'avantage d'être très légères car dépourvues de monture mais il est évident que la création de modèles nouveaux est très limitée de part justement le nombre réduit d'éléments constituant ces lunettes.

C'est ainsi qu'il est connu de colorer le tour des oculaires de manière à donner un certain agrément et fantaisie.

Des crayons de couleur existent sur le marché, mis au point spécifiquement pour colorer le tour des oculaires, mais ce procédé relativement artisanal donne un résultat parfois médiocre.

La présente invention a pour but de remédier à cet inconvénient tout en obtenant réellement le résultat recherché, c'est-à-dire en donnant l'impression que les lunettes comportent une monture colorée, très fine, alors que celle-ci n'est que fictive, mais avec un effet durable dans le temps.

A cet effet, l'invention concerne un oculaire en matière synthétique dit « organique » notamment pour lunettes comprenant une surface oculaire et une tranche ou bord, caractérisé en ce qu'il est revêtu par au moins une couche d'un matériau de protection teintable ou non et, dans au moins une zone préalablement choisie, par au moins une couche d'un matériau coloré, se substituant au matériau de protection, après enlèvement de celui-ci dans ladite zone.

Préférentiellement, la matière colorante est une solution de colorant apte à teinter la matière plastique constituant l'oculaire et découverte dans la zone choisie devant être colorée, ou à teinter le vernis teintable de protection.

D'autres caractéristiques et avantages de l'invention se dégageront de la description qui va suivre en regard des dessins annexés qui ne sont donnés qu'à titre d'exemples non limitatifs.

La figure 1 est une vue en perspective représentant des lunettes équipées d'oculaires selon l'invention.

Les figures 2 à 7 représentent à échelle agrandie une section selon différents profils du détail A de la figure 1.

La figure 8 est une vue d'un oculaire réalisé selon une variante d'application de l'invention.

La figure 9 est une vue en perspective d'un autre type de lunette équipée d'un oculaire unique réalisé selon l'invention.

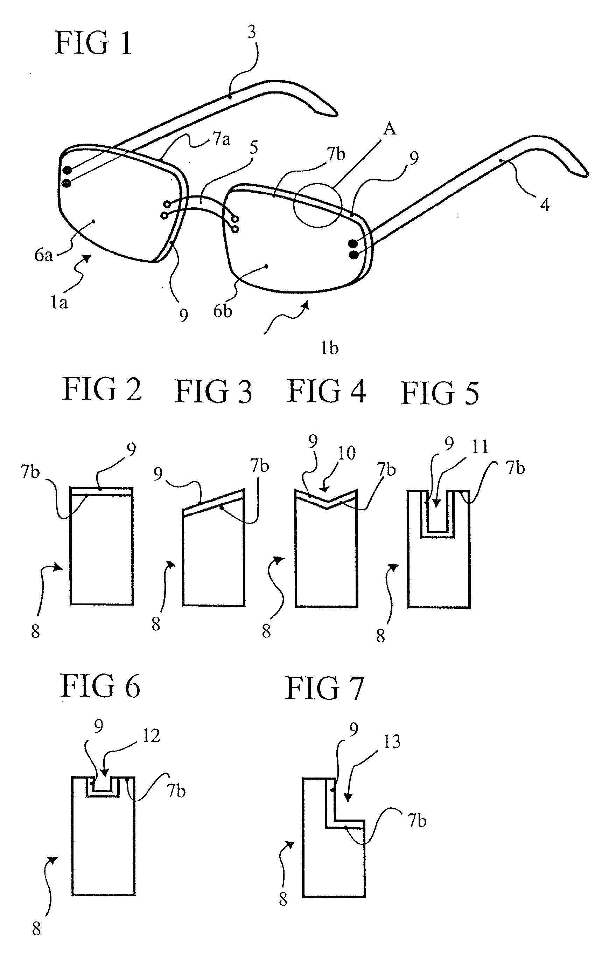

La figure 1 illustre en perspective d'un premier mode d'exécution d'une lunette équipée d'oculaires selon l'invention. Lesdites lunettes sont, de façon connue en soi, constituées par deux oculaires (1a, 1b) et par deux branches (3) et (4). Lesdits oculaires sont reliés entre eux par un nez (5).

Ce type de lunettes est communément appelé « trois pièces » car effectivement, les oculaires ne sont reliés que par trois éléments, à savoir, les branches (3) et (4) et le nez (5).

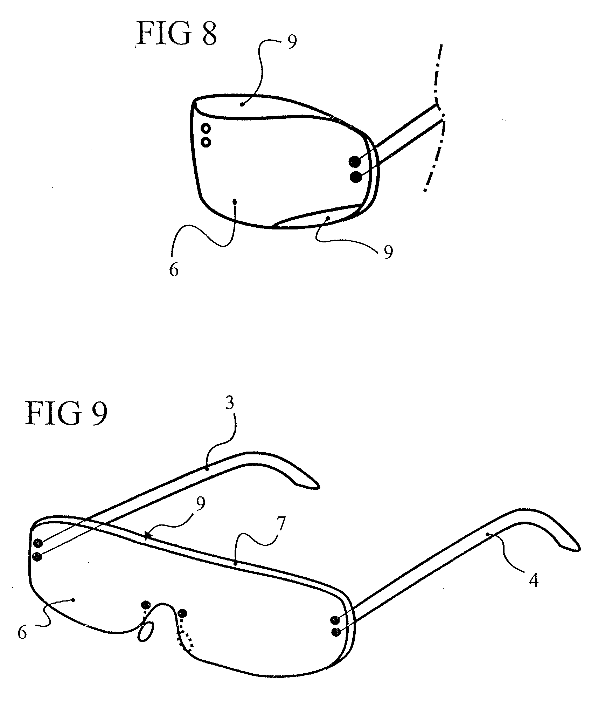

L'invention s'applique préférentiellement à ce type de lunettes, mais non exclusivement, car on peut également imaginer une application de l'invention à des lunettes dites suspendues, c'est-à-dire comprenant une barre reliant les branches, sur laquelle est fixé le nez, les verres comportant soit des trous, permettant la fixation à ladite barre par des vis ou autres moyens, soit une rainure permettant de les suspendre avec un fil transparent qui comportent, en plus, un fil nylon dans la tranche de ses oculaires. L'invention peut s'appliquer aussi à des lunettes du type comprenant un oculaire unique tel que cela est illustré à la figure 9.

Un oculaire (1a) ou (1b) pour lunettes est formé, de manière connue, par moulage d'une matière synthétique, par exemple du polycarbonate, selon une épaisseur et une courbure déterminées.

L'oculaire est généralement réalisé en matière synthétique du type polycarbonate, polyméthacrylate de méthyle, voire en acétobutyrate ou autres.

Selon l'invention, dans un mode d'exécution, l'oculaire (1a) ou (1b) comprenant une surface oculaire (6a, 6b) et une tranche (7a, 7b) est revêtu par au moins une couche d'un matériau de protection (8)tel qu'un vernis antirayure et, dans au moins une zone préalablement choisie, par au moins une couche d'un matériau coloré (9), tel qu'un colorant, se substituant au matériau de protection (8), après enlèvement de celui-ci dans ladite zone.

Selon l'exemple représenté, le colorant (9) est déposé sur toute la périphérie de la tranche (7a, 7b) de l'oculaire (1a, 1b) mais, bien entendu, il pourrait également ne l'être que partiellement selon l'effet recherché.

Selon l'exemple d'application de la figure 8, on voit que le colorant (9) peut aussi être déposé au moins partiellement dans une zone choisie de la surface oculaire (6), limitrophe de la tranche dudit oculaire.

Selon une caractéristique d'un premier mode d'exécution de l'invention, le colorant (9) est déposé dans la zone choisie après usinage de celle-ci, de manière à obtenir l'enlèvement du matériau de protection (8) dans cette zone et favoriser l'accroche dudit matériau coloré de substitution (9).

Selon l'exemple de réalisation de la figure 2, la tranche (7a) ou (7b) présente un plan droit.

Selon l'exemple de la figure 3, la tranche (7a, 7b) présente un plan incliné.

Selon l'exemple des figures 4 à 7, la tranche (7a) ou (7b) présente une rainure périphérique (10, 11, 12 ou 13) de forme et de profondeur différentes, pouvant varier à l'infini.

Selon une autre caractéristique de l'invention, le procédé de fabrication de l'oculaire qui vient d'être décrit consiste à :
- former l'oculaire (1a, 1b) selon une configuration choisie,
- appliquer le matériau de protection (8) sur la globalité de l'oculaire (1a, 1b),
- enlever, dans les zones choisies, le matériau de protection (8) par une opération d'usinage,
- appliquer le colorant (9) dans lesdites zones.

L'application du colorant (9) est obtenue par trempage dans un bain de l'oculaire (1a, 1b) revêtu du matériau de protection (8) et usiné dans les zones choisies.

Avantageusement, l'opération d'usinage est une opération de fraisage ou de meulage.

En fait, les essais ont démontré que le matériau de protection est un vernis anti-rayures, anti-buée ou analogues, du type polyuréthane ou polysiloxan.

Ceci donne des résultats particulièrement bons sur des oculaires dont la matière synthétique le constituant est un polycarbonate.

La figure 9 illustre un autre type de lunettes pouvant être équipée d'un oculaire selon l'invention. Selon ce type de lunettes, cette dernière comprend un oculaire unique (6) s'étendant devant les deux yeux de l'utilisateur.

Selon un deuxième mode d'exécution du procédé, l'oculaire recouvert d'un vernis, par exemple anti-rayure teintable, est usiné. L'oculaire est ensuite trempé par immersion dans une solution de colorant (9). Dans ces conditions, la coloration sera semblable sur la tranche et sur les faces, mais avec une intensité de couleurs plus importante sur la tranche que sur la face.

Une paire de lunettes telle qu'elle vient d'être décrite et réalisée selon les procédés précités, présente l'avantage de provoquer un effet de coloration simulant une monture ou une portion de monture, conservant l'aspect de légèreté des lunettes tout en leur conférant un cachet indiscutable.

Egalement, on pourrait imaginer, pour apporter un surcroît de fantaisie, de prévoir une coloration de la tranche d'une certaine couleur et une coloration du matériau de protection des surfaces oculaires d'une autre couleur, assortie à la précédente.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Procédé de décoration d'un oculaire pour lunettes, préalablement recouvert d'un matériau de protection, **caractérisé en ce qu'**il consiste à colorer la tranche ou une partie de la face dudit oculaire, par application d'un matériau coloré par trempage de l'oculaire dans un colorant.

2. Procédé selon la revendication, **caractérisé en ce que** l'application du colorant (9) est obtenue par trempage dans un bain de l'oculaire (1a, 1b) revêtu du matériau de protection (8) et usiné dans les zones choisies.

3. Procédé de décoration d'un oculaire pour lunettes, selon la revendication 1 ou 2, **caractérisé en ce qu'**il consiste à
- former l'oculaire (1a, 1b) selon une configuration choisie,
- appliquer un matériau de protection (8) sur la globalité de l'oculaire (1a, 1b),
- enlever, dans les zones choisies, le matériau de protection (8) par une opération d'usinage,
- appliquer le colorant (9) par trempage.

4. Procédé selon la revendication 2 ou 3, **caractérisé en ce que** l'opération d'usinage est une opération de fraisage ou de meulage.

5. Procédé selon l'une des revendications précédentes, **caractérisé en ce que** le matériau de protection est un vernis anti-rayures, teintable ou non teintable ,anti-buée ou analogues, du type polyuréthane ou polysiloxan.

6. Procédé selon la revendication 5, **caractérisé en ce que** la matière synthétique le constituant est un polycarbonate.

7. Oculaire pour lunette réalisé par le procédé selon l'une quelconque des revendications précédentes.

8. Oculaire selon la revendication 7, **caractérisé en ce qu'**il est en matière synthétique dit « organique » notamment pour lunettes comprenant une surface oculaire (6a, 6b) et une tranche ou bord (7a, 7b), et **en ce qu'**il est revêtu par au moins une couche d'un matériau de protection (8) et, dans au moins une zone préalablement choisie, par au moins, une couche d'un matériau coloré (9) se substituant au matériau de protection (8) après enlèvement de celui-ci dans ladite zone.

9. Oculaire selon la revendication 8, **caractérisé en ce que** le colorant (9) est déposé au moins partiellement sur la tranche (7a, 7b) dudit oculaire (1a, 1b).

10. Oculaire selon la revendication 9, **caractérisé en ce que** le colorant est déposé sur toute la périphérie de la tranche (7a, 7b).

11. Oculaire selon la revendication 10, **caractérisé en ce que** le colorant (9) est déposé au moins partiellement dans une zone choisie de la surface oculaire (6a, 6b), limitrophe de la tranche (7a, 7b).

12. Oculaire selon l'une des revendications 9 à 11, **caractérisé en ce que** le colorant (9) est déposé dans la zone choisie après usinage de celle-ci, de manière à obtenir l'enlèvement du matériau de protection (8) dans cette zone et à favoriser l'accroche dudit matériau coloré de substitution (9).

13. Oculaire selon la revendication 12, **caractérisé en ce que** la tranche (7a, 7b) présente un plan droit, ou un plan incliné, ou une rainure périphérique continue ou discontinue.

14. Lunettes constituées par les oculaires selon l'une quelconque des revendications 7 à 13, obtenues selon le procédé des revendications 1 à 6, **caractérisées en ce qu'**elles que l'effet de coloration simule une monture ou une portion de monture, tout en conservant la légèreté des lunettes.
